# EUROPÄISCHE PATENTSCHRIFT

(11) **EP 3 807 707 B1**
(45) Veröffentlichungstag und Bekanntmachung des Hinweises auf die Patenterteilung: **06.08.2025**
(21) Anmeldenummer: 19731928.8
(22) Anmeldetag: 13.06.2019
(51) Int. Cl.: G02B 27/01, G02B 27/00, G02B 6/34

(54) **LICHTWELLENLEITER FÜR EIN ANZEIGEGERÄT**
OPTICAL WAVEGUIDE FOR A DISPLAY DEVICE
GUIDE D'ONDE OPTIQUE POUR DISPOSITIF D'AFFICHAGE

(30) Priorität: 15.06.2018 DE 102018209628
(43) Veröffentlichungstag der Anmeldung: 21.04.2021
(73) Patentinhaber: Continental Automotive Technologies GmbH, 30175 Hannover (DE)
(72) Erfinder: KERN, Thorsten Alexander, 65824 Schwalbach a. Ts. (DE); WILLE, Felicitas, 65824 Schwalbach a. Ts. (DE)
(74) Vertreter: Aumovio Corporation
(86) Internationale Anmeldenummer: PCT/EP2019/065605
(87) Internationale Veröffentlichungsnummer: WO 2019/238885

(56) Entgegenhaltungen:
- WO-A1-2016/113288
- WO-A1-2016/113288
- US-A1- 2006 228 073
- US-A1- 2010 157 400
- US-A1- 2010 157 400
- US-A1- 2013 101 253

## Beschreibung

Die vorliegende Erfindung betrifft einen Lichtwellenleiter für ein Anzeigegerät sowie Verfahren zur Herstellung eines solchen Lichtwellenleiters. Die Erfindung betrifft zudem ein Gerät zum Generieren eines virtuellen Bildes, das einen solchen Lichtwellenleiter verwendet.

Unter einem Head-Up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays bestehen im Allgemeinen aus einem Bildgenerator, einer Optikeinheit und einer Spiegeleinheit. Der Bildgenerator erzeugt das Bild. Die Optikeinheit leitet das Bild auf die Spiegeleinheit. Der Bildgenerator wird oft auch als bildgebende Einheit oder PGU (Picture Generating Unit) bezeichnet. Die Spiegeleinheit ist eine teilweise spiegelnde, lichtdurchlässige Scheibe. Der Betrachter sieht also die vom Bildgenerator dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung berücksichtigt werden muss. Durch das Zusammenwirken von Optikeinheit und Spiegeleinheit ist das virtuelle Bild eine vergrößerte Darstellung des vom Bildgenerator erzeugten Bildes.

Der Betrachter kann das virtuelle Bild nur aus der Position der sogenannten Eyebox betrachten. Als Eyebox wird ein Bereich bezeichnet, dessen Höhe und Breite einem theoretischen Sichtfenster entspricht. So lange sich ein Auge des Betrachters innerhalb der Eyebox befindet, sind alle Elemente des virtuellen Bildes für das Auge sichtbar. Befindet sich das Auge hingegen außerhalb der Eyebox, so ist das virtuelle Bild für den Betrachter nur noch teilweise oder gar nicht sichtbar. Je größer die Eyebox ist, desto weniger eingeschränkt ist der Betrachter somit bei der Wahl seiner Sitzposition.

Die Größe des virtuellen Bildes herkömmlicher Head-Up-Displays wird durch die Größe der Optikeinheit begrenzt. Ein Ansatz zur Vergrößerung des virtuellen Bildes besteht darin, das von der bildgebenden Einheit kommende Licht in einen Lichtwellenleiter einzukoppeln. Das in den Lichtwellenleiter eingekoppelte Licht, das die Bildinformation trägt, wird an dessen Grenzflächen totalreflektiert und wird somit innerhalb des Lichtwellenleiters geleitet. Zusätzlich wird an einer Vielzahl von Positionen entlang der Ausbreitungsrichtung jeweils ein Teil des Lichts ausgekoppelt, so dass die Bildinformation über die Fläche des Lichtwellenleiters verteilt ausgegeben wird. Durch den Lichtwellenleiter erfolgt auf diese Weise eine Aufweitung der Austrittspupille. Die effektive Austrittspupille setzt sich hier aus Bildern der Apertur des Bilderzeugungssystems zusammen.

Vor diesem Hintergrund beschreibt die US 2016/0124223 A1 eine Anzeigevorrichtung für virtuelle Bilder. Die Anzeigevorrichtung umfasst einen Lichtwellenleiter, der bewirkt, dass von einer bildgebenden Einheit kommendes Licht, das durch eine erste Lichteinfallsfläche einfällt, wiederholt einer internen Reflexion unterzogen wird, um sich in einer ersten Richtung von der ersten Lichteinfallsfläche weg zu bewegen. Der Lichtwellenleiter bewirkt zudem, dass ein Teil des im Lichtwellenleiter geführten Lichts durch Bereiche einer ersten Lichtaustrittsfläche, die sich in der ersten Richtung erstreckt, nach außen austritt. Die Anzeigevorrichtung umfasst weiterhin ein erstes lichteinfallseitiges Beugungsgitter, das auftreffendes Licht beugt, um zu bewirken, dass das gebeugte Licht in den Lichtwellenleiter eintritt, und ein erstes lichtausfallendes Beugungsgitter, das vom Lichtwellenleiter einfallendes Licht beugt.

Ein herkömmliches Vollfarben-Head-Up-Display auf Basis von Lichtwellenleitern besteht in der Regel aus drei übereinanderliegenden, monochromen Lichtwellenleitern, jeweils einer für die Farbe Rot, Grün, und Blau. Diese Lichtwellenleiter bestehen jeweils aus einem Glassubstrat, einer dünnen Hologrammschicht und einem weiteren Glassubstrat als Deckschicht. Die Gläser sind dabei typischerweise dicker als 1 mm. Außerdem sind sie steif und robust gegen Biegung.

Die Substrate zur Herstellung eines solchen Lichtwellenleiters müssen über sehr gute Oberflächeneigenschaften verfügen, beispielsweise hinsichtlich der Ebenheit. Solche Eigenschaften sind ohne aufwendige Oberflächenbehandlung der Substrate nur sehr schwer und zu hohen Preisen am Markt erhältlich. Außerdem führt die Substratdicke zu einem erhöhten Aufbau des aus drei monochromen Lichtwellenleitern bestehenden Lichtwellenleiters. Dies wiederum führt zu einem erhöhten Aufbau des gesamten den Lichtwellenleiter enthaltenden Produktes, beispielsweise eines Head-Up-Displays. Zudem kommt es zu Überlagerungsfehlern der durch jeweils einen der monochromen Lichtwellenleiter transportierten Farben, wenn die Lichtwellenleiter unter einem steilen Winkel betrachtet werden. Dies ist insbesondere bei der Anwendung als Head-Up-Display in Kraftfahrzeugen oftmals der Fall.

WO 2016/113288 A1 beschreibt ein Verfahren zur Herstellung eines optischen Gießkörpers umfassend wenigstens ein volumenholografisch optisches Element mittels eines Gießprozesses. Bei dem Verfahren wird eine Gießform bereitgestellt, die ein erstes Formteil und ein zweites Formteil umfasst, die unter Ausbildung der Gießform verbindbar sind. Ein holografisch optisches Element wird an dem ersten Formteil oder/und an dem zweiten Formteil positioniert und ausgerichtet. In einem oder mehreren Gießschritten wird das holografisch optische Element in Gießmaterial eingebettet.

Es ist eine Aufgabe der vorliegenden Erfindung, einen verbesserten Lichtwellenleiter sowie Verfahren für die Herstellung eines solchen Lichtwellenleiters bereitzustellen.

Diese Aufgabe wird durch Verfahren mit den Merkmalen des Anspruchs 1 oder 2 und durch einen Lichtwellenleiter mit den Merkmalen des Anspruchs 8 gelöst. Bevorzugte Ausgestaltungen der Erfindung sind Gegenstand der abhängigen Ansprüche. Gemäß einem ersten Aspekt der Erfindung umfasst ein Verfahren zum Herstellen eines Lichtwellenleiters die Schritte:
- Aufbringen einer Schicht eines lichtdurchlässigen Materials auf eine erste Abformplatte;
- Aushärten des aufgebrachten lichtdurchlässigen Materials zu einer Deckschicht;
- Aufbringen einer Hologrammschicht auf die Deckschicht;
- Aufbringen eines Substrates auf die Hologrammschicht; und
- Belichten und Aushärten der Hologrammschicht.

Für eine Ausführungsform des Lichtwellenleiters, bei der das Substrat aus Glas besteht, wird für die Herstellung der Materialschicht das Material, beispielsweise ein Lack oder ein optisch klarer Klebstoff, auf eine Abformplatte aufgetragen, d.h. auf eine Referenzfläche, welche über die gewünschten Eigenschaften, insbesondere bezüglich Ebenheit, verfügt. Das Material wird danach ausgehärtet. Im Anschluss wird eine dünne holographische Schicht aufgetragen, deren Schichtdicke durch Abstandshalter definiert werden kann. Schließlich wird ein Glassubstrat auf den Aufbau aus Materialschicht und dünner Hologrammschicht aufgebracht und die Hologrammschicht belichtet und ausgehärtet. Die Belichtung und Aushärtung der dünnen Hologrammschicht ist vor und nach dem Aufbringen des Glassubstrates möglich. Das Glassubstrat kann dabei als mechanisch stabiler Träger dienen.

Ein Vorteil des beschriebenen Verfahrens liegt in der Eliminierung eines Glases für den Aufbau eines Lichtwellenleiters. Dies ermöglicht eine dickenreduzierte Ausführung des Lichtwellenleiters. Darüber hinaus werden die Eigenschaften der Abformplatte der Gießform, wie beispielsweise deren Ebenheit, auf die an ihr geformte Deckschicht übertragen. Damit werden Oberflächeneigenschaften erzielt, welche die Eigenschaften von Glasmaterialien sogar noch übertreffen. Zudem ist die Herstellung der Deckschicht kostengünstiger als die Verwendung der derzeit am Markt verfügbaren Glassubstrate mit entsprechenden Oberflächeneigenschaften.

Ein mittels dieses erfindungsgemäßen Verfahrens hergestellter Lichtwellenleiter weist ein Substrat, eine Deckschicht und eine zwischen diesen beiden befindliche optisch aktive Schicht auf. Dabei besteht die Deckschicht aus einem lichtdurchlässigen Material, das einem Aushärtungsprozess unterzogen wurde. Die Deckschicht wird dabei in einer Form mit exakt vorgegebener Geometrie aufgebracht und ausgehärtet. Sie weist somit eine exakte Oberflächenform auf, ohne dazu aufwendig nachbearbeitet werden zu müssen. Schwankungen in der Qualität der Oberflächen, wie sie bei den bisher als Deckschicht genutzten Glassubstraten auftreten, werden vermieden. Durch die hohe Güte der geformten Oberflächen wird zudem eine deutliche Verbesserung der totalen inneren Reflexion im Sinne einer Reduzierung der Winkelfehler erzielt.

Gemäß einem weiteren Aspekt der Erfindung umfasst ein Verfahren zum Herstellen eines Lichtwellenleiters die Schritte:
- Aufbringen einer Schicht eines lichtdurchlässigen Materials auf eine erste Abformplatte;
- Aushärten des aufgebrachten lichtdurchlässigen Materials zu einer Deckschicht;
- Aufbringen einer Hologrammschicht auf die Deckschicht;
- Belichten und Aushärten der Hologrammschicht;
- Aufbringen einer Schicht eines lichtdurchlässigen Materials auf die Hologrammschicht;
- Formen des aufgebrachten lichtdurchlässigen Materials mittels einer zweiten Abformplatte; und
- Aushärten des aufgebrachten lichtdurchlässigen Materials zu einem Substrat.

Für eine Ausführungsform des Lichtwellenleiters, bei der weder das Substrat noch die Deckschicht aus Glas bestehen, wird für die Herstellung der Materialschicht das Material, beispielsweise ein Lack oder ein optisch klarer Klebstoff, auf eine Abformplatte aufgetragen, d.h. auf eine Referenzfläche, welche über die gewünschten Eigenschaften, insbesondere bezüglich Ebenheit, verfügt. Das Material wird danach ausgehärtet. Im Anschluss wird eine dünne holographische Schicht aufgetragen, deren Schichtdicke durch Abstandshalter definiert werden kann. Danach wird die Hologrammschicht belichtet und ausgehärtet. Für die Realisierung der zweiten Materialschicht, die beispielsweise ebenfalls aus einem Lack oder einem optisch klaren Klebstoff besteht, wird das Material auf die Hologrammschicht aufgetragen. Die Oberfläche der Materialschicht wird durch eine Gegenplatte abgeformt, die unter Krafteinwirkung in Kontakt mit der Materialschicht gebracht wird. Für das Substrat und die Deckschicht wird vorzugsweise das gleiche lichtdurchlässige Material genutzt, es können aber auch verschiedene Materialien Verwendung finden.

Ein Vorteil des beschriebenen Verfahrens liegt in der Eliminierung zweier Gläser für den Aufbau eines Lichtwellenleiters. Darüber hinaus werden die Eigenschaften der Abformplatte der Gießform, wie beispielsweise deren Ebenheit, auf die an ihr geformte Deckschicht übertragen.

Bei einem mittels dieses erfindungsgemäßen Verfahrens hergestellten Lichtwellenleiter besteht das Substrat ebenfalls aus einem lichtdurchlässigen Material, das einem Aushärtungsprozess unterzogen wurde. Dies hat den Vorteil, dass auch das Substrat kostengünstig und dennoch die gewünschten Oberflächeneigenschaften aufweisend herstellbar ist. Zudem kann auf diese Weise ein in einem gewissen Umfang flexibler Lichtwellenleiter realisiert werden.

Die beiden Materialschichten können auch als Trägermaterial für einen Transfer der dünnen holographischen Schicht auf ein Substrat oder auf einen anderen Wellenleiter genutzt werden, da sich die Materialschichten von der dünnen Hologrammschicht lösen lassen, ohne diese zu beschädigen.

Gemäß einem Aspekt der Erfindung wird zwischen der ersten Abformplatte und der Schicht des lichtdurchlässigen Materials oder zwischen der zweiten Abformplatte und der Schicht des lichtdurchlässigen Materials eine Trennschicht angeordnet. Zwischen den Abformplatten und den jeweiligen angrenzenden Materialschichten werden vorzugsweise eine oder mehrere weitere Schichten eingefügt, die zur besseren Ablösbarkeit der Materialschichten von der jeweiligen Abformplatte dienen. Dies ist insbesondere dann sinnvoll, wenn das verwendete Material ein Klebstoff ist, der sich ohne eine zwischen ihm und der Abformplatte befindliche weitere Schicht nur mit einem gewissen Aufwand von der Abformplatte lösen lässt.

Gemäß einem Aspekt der Erfindung ist das lichtdurchlässige Material ein Lack oder ein optisch klarer Klebstoff (OCA, Optical Clear Adhesive), d.h. ein aushärtender Klebstoff. Dieser weist üblicherweise einen Brechungsindex auf, der den von ihm zu klebenden transparenten Werkstoffen entspricht. Derartige Klebstoffe sind dem Fachmann bekannt und können sehr gut auf einen gewünschten Brechungsindex eingestellt werden, hier den des verwendeten beziehungsweise zu ersetzenden Glases. Die genannten Materialien haben den Vorteil, kostengünstig und gut verarbeitbar zu sein.

Gemäß einem Aspekt der Erfindung weist das einem Aushärtungsprozess unterzogene lichtdurchlässige Material einen Brechungsindex größer oder gleich 1,4 auf. Es hat damit optische Eigenschaften, die denen von Glas entsprechen, und kann ohne aufwendige Neuberechnung der optischen Eigenschaften als Ersatz für ansonsten verwendetes Glas eingesetzt werden. Für die Anwendung in Lichtwellenleitern hat sich ein Brechungsindex von n=1,5±0,02 als besonders geeignet herausgestellt.

Gemäß einem Aspekt der Erfindung weisen die erste Abformplatte oder die zweite Abformplatte eine Strukturierung auf. Alternativ zu einer ebenen Materialschicht kann durch eine Strukturierung der Abformplatten auch eine gezielte Strukturierung der Form der Materialschicht erreicht werden. Auf diese Weise lassen sich unterschiedliche Dicken der Lackschicht bzw. des Lichtwellenleiters in verschiedenen Bereichen realisieren. Dies sind beispielsweise Vertiefungen oder Erhöhungen im niedrigen Millimeterbereich.

Gemäß einem Aspekt der Erfindung wird ein Lichtwellenleiter für ein Anzeigegerät mittels eines erfindungsgemäßen Verfahrens hergestellt.

Gemäß einem weiteren Aspekt der Erfindung weist ein Gerät zum Generieren eines virtuellen Bildes auf:
- eine bildgebende Einheit zum Erzeugen eines Bildes;
- eine Optikeinheit zum Projizieren des Bildes in Richtung einer Spiegeleinheit zum Generieren des virtuellen Bildes; und
- einen erfindungsgemäßen Lichtwellenleiter zum Aufweiten einer Austrittspupille.

Der erfindungsgemäße Lichtwellenleiter ermöglicht es, Head-Up-Displays mit einem reduzierten Platzbedarf zu realisieren. Besonders vorteilhaft ist die Verwendung bei Vollfarben-Head-Up-Display auf Basis von Lichtwellenleitern, bei denen drei übereinanderliegende, monochrome Lichtwellenleiter benötigt werden.

Vorzugsweise wird ein erfindungsgemäßes Gerät zum Generieren eines virtuellen Bildes in einem Fortbewegungsmittel eingesetzt, um ein virtuelles Bild für einen Bediener des Fortbewegungsmittels zu erzeugen. Bei dem Fortbewegungsmittel kann es sich beispielsweise um ein Kraftfahrzeug oder ein Luftfahrzeug handeln. Selbstverständlich kann die erfindungsgemäße Lösung auch in anderen Umgebungen oder für andere Anwendungen genutzt werden, z.B. in Lastkraftwagen, in der Bahntechnik und im ÖPNV, bei Kranen und Baumaschinen, etc.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Head-Up-Display gemäß dem Stand der Technik für ein Kraftfahrzeug;
- Fig. 2: zeigt einen Lichtwellenleiter mit zweidimensionaler Vergrößerung;
- Fig. 3: zeigt schematisch ein Head-Up-Display mit Lichtwellenleiter;
- Fig. 4: zeigt schematisch ein Head-Up-Display mit Lichtwellenleiter in einem Kraftfahrzeug;
- Fig. 5: zeigt drei Beispiele eines Lichtwellenleiters im Längsschnitt;
- Fig. 6: zeigt schematisch eine erste Ausführungsform eines erfindungsgemäßen Lichtwellenleiters;
- Fig. 7: zeigt schematisch eine zweite Ausführungsform eines erfindungsgemäßen Lichtwellenleiters;
- Fig. 8: zeigt ein Herstellungsdetail für den Lichtwellenleiter aus Fig. 7;
- Fig. 9: zeigt schematisch ein erstes Herstellungsverfahren für einen erfindungsgemäßen Lichtwellenleiter;
- Fig. 10: zeigt eine Abwandlung des Herstellungsverfahrens aus Fig. 9; und
- Fig. 11: zeigt schematisch ein zweites Herstellungsverfahren für einen erfindungsgemäßen Lichtwellenleiter.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

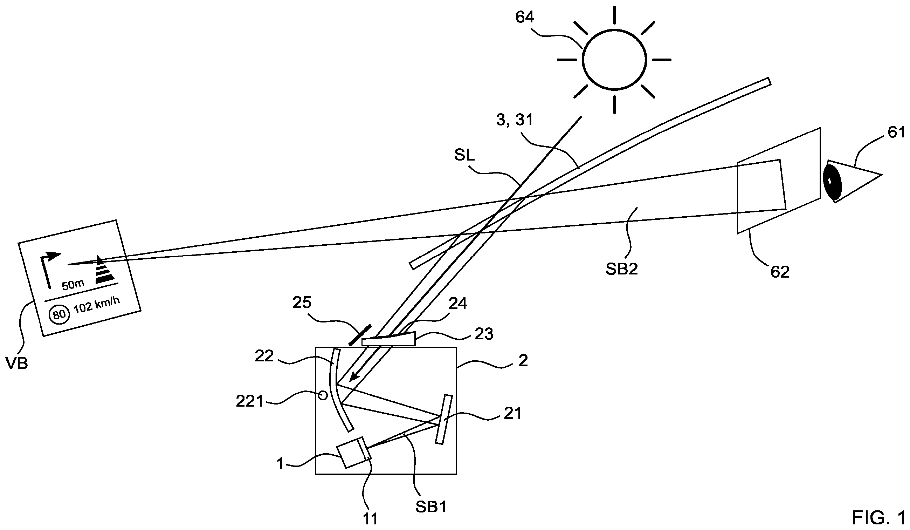

Zunächst soll anhand der Figuren 1 bis 4 der Grundgedanke eines Head-Up-Displays mit Lichtwellenleiter dargelegt werden.

Fig. 1 zeigt eine Prinzipskizze eines Head-Up-Displays gemäß dem Stand der Technik für ein Kraftfahrzeug. Das Head-Up-Display weist einen Bildgenerator 1, eine Optikeinheit 2 und eine Spiegeleinheit 3 auf. Von einem Anzeigeelement 11 geht ein Strahlenbündel SB1 aus, welches von einem Faltspiegel 21 auf einen gekrümmten Spiegel 22 reflektiert wird, der es Richtung Spiegeleinheit 3 reflektiert. Die Spiegeleinheit 3 ist hier als Windschutzscheibe 31 eines Kraftfahrzeugs dargestellt. Von dort gelangt das Strahlenbündel SB2 in Richtung eines Auges 61 eines Betrachters.

Der Betrachter sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 2 und Spiegeleinheit 3 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder gar nicht sichtbar. Je größer die Eyebox 62 ist, desto weniger eingeschränkt ist der Betrachter bei der Wahl seiner Sitzposition.

Die Krümmung des gekrümmten Spiegels 22 ist an die Krümmung der Windschutzscheibe 31 angepasst und sorgt dafür, dass die Bildverzeichnung über die gesamte Eyebox 62 stabil ist. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der Faltspiegel 21 dient dazu, dass der vom Strahlenbündel SB1 zurückgelegte Weg zwischen Anzeigeelement 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Auf der Abdeckung 23 befindet sich weiterhin eine optische Folie bzw. ein Polarisator 24. Das Anzeigeelement 11 ist typischerweise polarisiert und die Spiegeleinheit 3 wirkt wie ein Analysator. Zweck des Polarisators 24 ist es daher, die Polarisation zu beeinflussen, um eine gleichmäßige Sichtbarkeit des Nutzlichts zu erzielen. Ein Blendschutz 25 dient dazu, das über die Grenzfläche der Abdeckung 23 reflektierte Licht sicher zu absorbieren, sodass keine Blendung des Betrachters hervorgerufen wird. Außer dem Sonnenlicht SL kann auch das Licht einer anderen Störlichtquelle 64 auf das Anzeigeelement 11 gelangen. In Kombination mit einem Polarisationsfilter kann der Polarisator 24 zusätzlich auch genutzt werden, um einfallendes Sonnenlicht SL auszublenden.

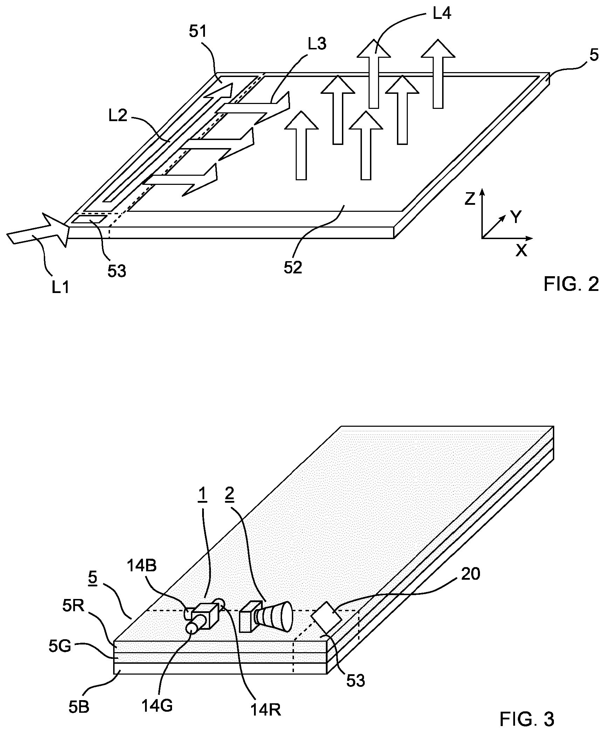

Fig. 2 zeigt in schematischer räumlicher Darstellung einen Lichtwellenleiter 5 mit zweidimensionaler Vergrößerung. Im unteren linken Bereich erkennt man ein Einkoppelhologramm 53, mittels dessen von einer nicht dargestellten bildgebenden Einheit kommendes Licht L1 in den Lichtwellenleiter 5 eingekoppelt wird. In diesem breitet es sich in der Zeichnung nach rechts oben aus, entsprechend dem Pfeil L2. In diesem Bereich des Lichtwellenleiters 5 befindet sich ein Falthologramm 51, das ähnlich wie viele hintereinander angeordnete teildurchlässige Spiegel wirkt, und ein in Y-Richtung verbreitertes, sich in X-Richtung ausbreitendes Lichtbündel erzeugt. Dies ist durch drei Pfeile L3 angedeutet. In dem sich in der Abbildung nach rechts erstreckenden Teil des Lichtwellenleiters 5 befindet sich ein Auskoppelhologramm 52, welches ebenfalls ähnlich wie viele hintereinander angeordnete teildurchlässige Spiegel wirkt, und durch Pfeile L4 angedeutet Licht in Z-Richtung nach oben aus dem Lichtwellenleiter 5 auskoppelt. Hierbei erfolgt eine Verbreiterung in X-Richtung, sodass das ursprüngliche einfallende Lichtbündel L1 als in zwei Dimensionen vergrößertes Lichtbündel L4 den Lichtwellenleiter 5 verlässt.

Fig. 3 zeigt in räumlicher Darstellung ein Head-Up-Display mit drei Lichtwellenleitern 5R, 5G, 5B, die übereinanderliegend angeordnet sind und für je eine Elementarfarbe Rot, Grün und Blau stehen. Sie bilden gemeinsam den Lichtwellenleiter 5. Die in dem Lichtwellenleiter 5 vorhandenen Hologramme 51, 52, 53 sind wellenlängenabhängig, sodass jeweils ein Lichtwellenleiter 5R, 5G, 5B für eine der Elementarfarben verwendet wird. Oberhalb des Lichtwellenleiters 5 sind ein Bildgenerator 1 und eine Optikeinheit 2 dargestellt. Die Optikeinheit 2 weist einen Spiegel 20 auf, mittels dessen das vom Bildgenerator 1 erzeugte und von der Optikeinheit 2 geformte Licht in Richtung des jeweiligen Einkoppelhologramms 53 umgelenkt wird. Der Bildgenerator 1 weist drei Lichtquellen 14R, 14G, 14B für die drei Elementarfarben auf. Man erkennt, dass die gesamte dargestellte Einheit eine im Vergleich zu ihrer lichtabstrahlenden Fläche geringe Gesamtbauhöhe aufweist.

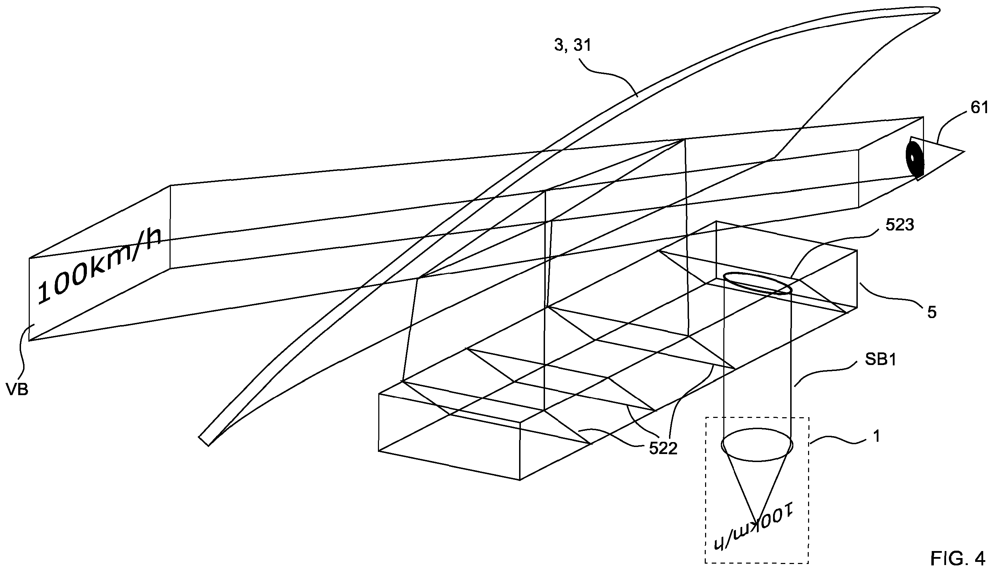

Fig. 4 zeigt ein Head-Up-Display in einem Kraftfahrzeug ähnlich zu Fig. 1, hier allerdings in räumlicher Darstellung und mit einem Lichtwellenleiter 5. Man erkennt den schematisch angedeuteten Bildgenerator 1, der ein paralleles Strahlenbündel SB1 erzeugt, welches mittels der Spiegelebene 523 in den Lichtwellenleiter 5 eingekoppelt wird. Die Optikeinheit ist der Einfachheit halber nicht dargestellt. Mehrere Spiegelebenen 522 reflektieren jeweils einen Teil des auf sie auftreffenden Lichts Richtung Windschutzscheibe 31, der Spiegeleinheit 3. Von dieser wird das Licht Richtung Auge 61 reflektiert. Der Betrachter sieht ein virtuelles Bild VB über der Motorhaube bzw. in noch weiterer Entfernung vor dem Kraftfahrzeug. Auch bei dieser Technologie ist die gesamte Optik in einem Gehäuse verbaut, dass von einer transparenten Abdeckung gegen die Umgebung abgegrenzt ist. Wie schon beim Head-Up-Display aus Fig. 1 kann auf dieser Abdeckung ein Retarder angeordnet sein.

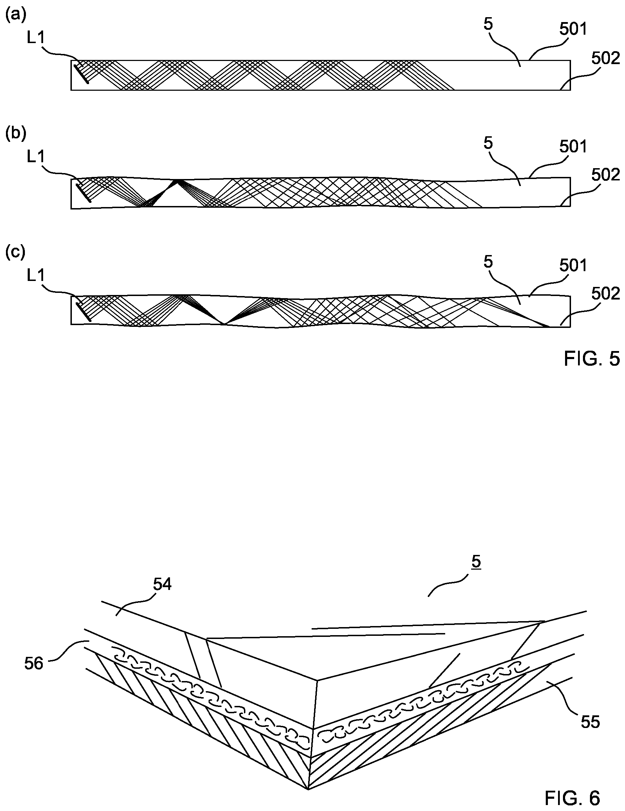

Fig. 5 zeigt drei Beispiele eines Lichtwellenleiters 5 im Längsschnitt. Der Lichtwellenleiter 5 im Teilbild (a) weist eine ideal ebene obere Begrenzungsfläche 501 und eine ideal ebene untere Begrenzungsfläche 502 auf, welche beide parallel zueinander angeordnet sind. Man erkennt, dass ein paralleles Lichtbündel L1, welches sich von links nach rechts im Lichtwellenleiter 5 ausbreitet, aufgrund der Parallelität und Ebenheit der oberen und unteren Begrenzungsflächen 501, 502 im Querschnitt unverändert und parallel verbleibt. Der Lichtwellenleiter 5 im Teilbild (b) weist obere und untere Begrenzungsflächen 501, 502 auf, die nicht vollkommen eben und auch nicht parallel zueinander sind. Der Lichtwellenleiter 5 hat somit eine in Lichtausbreitungsrichtung variierende Dicke. Man erkennt, dass das Lichtbündel L1 schon nach wenigen Reflexionen nicht mehr parallel ist und auch keinen homogenen Querschnitt aufweist. Der Lichtwellenleiter 5 in Teilbild (c) hat obere und untere Begrenzungsflächen 501, 502, die noch stärker von der Idealform abweichen als die in Teilbild (b). Das Lichtbündel L1 weicht daher ebenfalls noch stärker von der Idealform ab. Für die Qualität der Lichtausbreitung im Lichtwellenleiter ist die Ebenheit der Begrenzungsflächen 501, 502 somit von großer Bedeutung.

Fig. 6 zeigt eine erste Ausführungsform eines erfindungsgemäßen Lichtwellenleiters 5. In dieser Ausführungsform wird ein Substrat 54 genutzt, das aus Glas besteht. Auf dem Substrat 54 ist eine dünne Hologrammschicht 56 angeordnet. Auf der Hologrammschicht 56 ist eine Deckschicht 55 angeordnet, die aus einem lichtdurchlässigen Material besteht, das einem Aushärtungsprozess unterzogen wurde. Das lichtdurchlässige Material kann beispielsweise ein Lack oder ein optisch klarer Klebstoff sein. Vorzugsweise ist der Brechungsindex des Materials größer oder gleich 1,4. Bei Bedarf kann die Deckschicht 55 eine Strukturierung aufweisen.

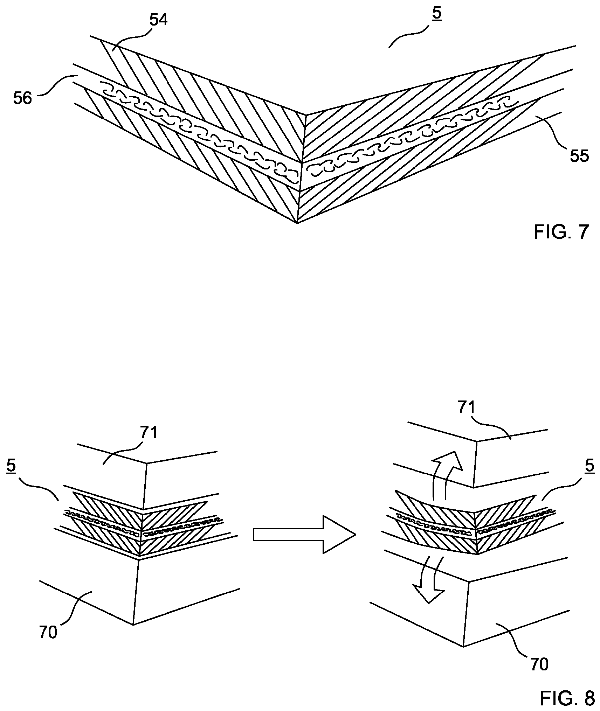

Fig. 7 zeigt eine zweite Ausführungsform eines erfindungsgemäßen Lichtwellenleiters 5. In dieser Ausführungsform wird ein Substrat 54 genutzt, das ebenfalls aus einem lichtdurchlässigen Material besteht, das einem Aushärtungsprozess unterzogen wurde. Auf dem Substrat 54 ist wiederum eine dünne Hologrammschicht 56 angeordnet, auf die eine Deckschicht 55 aufgebracht ist. Wie zuvor besteht die Deckschicht 55 aus einem lichtdurchlässigen Material besteht, das einem Aushärtungsprozess unterzogen wurde. Für das Substrat 54 und die Deckschicht 55 wird vorzugsweise das gleiche lichtdurchlässige Material genutzt, es können aber auch verschiedene Materialien Verwendung finden. Auch bei dieser Ausführungsform kann das lichtdurchlässige Material ein Lack oder ein optisch klarer Klebstoff sein. Vorzugsweise ist auch hier der Brechungsindex des lichtdurchlässigen Materials größer oder gleich 1,4. Bei Bedarf können das Substrat 54 oder die Deckschicht 55 eine Strukturierung aufweisen.

Fig. 8 zeigt ein Herstellungsdetail für den Lichtwellenleiter 5 aus Fig. 7. Für die Herstellung dieses Aufbaus werden zwei Abformplatten 70, 71 verwendet, die über die gewünschten Oberflächeneigenschaften verfügen. Zum Entfernen des Lichtwellenleiters 5 aus dem Fertigungsaufbau werden die Abformplatten 70, 71 auseinandergeführt, wobei sich der Lichtwellenleiter 5 von den Abformplatten 70, 71 löst.

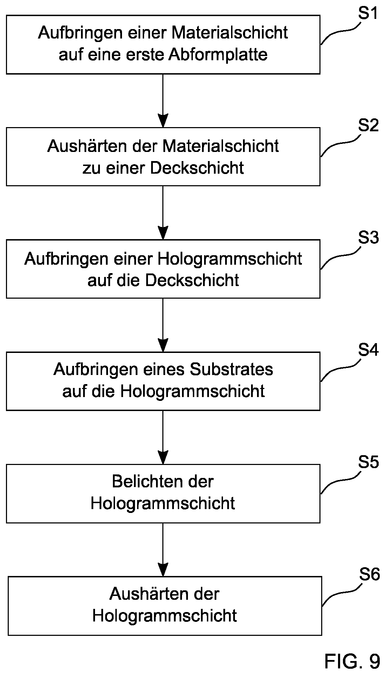

Fig. 9 zeigt in schematischer Form ein erstes Herstellungsverfahren für einen erfindungsgemäßen Lichtwellenleiter. Zunächst erfolgt ein Aufbringen S1 einer Schicht eines aushärtbaren lichtdurchlässigen Materials auf eine erste Abformplatte. Diese Schicht wird zur Deckschicht ausgehärtet S2. Anschließend erfolgt ein Aufbringen S3 einer Hologrammschicht auf die Deckschicht. Auf diese Hologrammschicht wird dann ein Substrat aufgebracht S4 und es erfolgen Belichten S5 und Aushärten S6 der Hologrammschicht 56.

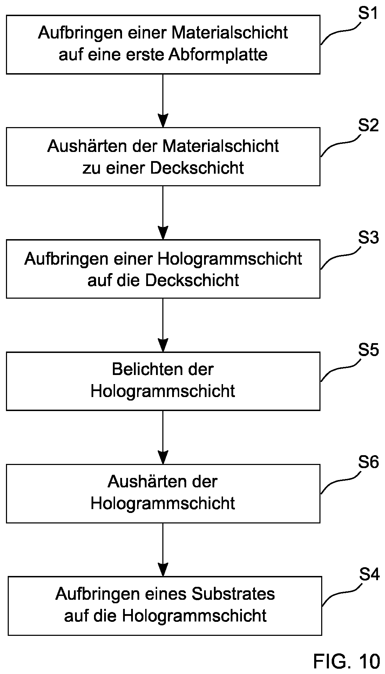

Fig. 10 zeigt in schematischer Form ein gegenüber der Fig. 9 abgewandeltes Herstellungsverfahren für einen erfindungsgemäßen Lichtwellenleiter. Das Belichten S5 und Aushärten S6 erfolgen nach dieser vorteilhaften Variante bereits vor dem Aufbringen S4 des Substrates. Die restlichen Schritte entsprechen denen aus Fig. 9

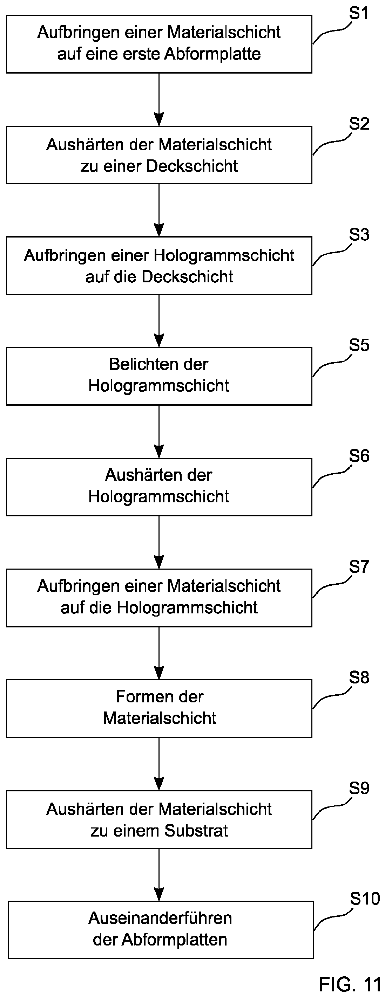

Fig. 11 zeigt in schematischer Form ein weiteres Herstellungsverfahren für einen erfindungsgemäßen Lichtwellenleiter. Zunächst erfolgt ein Aufbringen S1 einer Schicht eines aushärtbaren lichtdurchlässigen Materials auf eine untere Abformplatte. Diese Schicht wird zur Deckschicht ausgehärtet S2. Es schließen sich das Aufbringen S3 einer Hologrammschicht auf die Deckschicht sowie das Belichten S5 und Aushärten S6 der Hologrammschicht an. Danach erfolgt ein Aufbringen S7 einer weiteren Schicht eines aushärtbaren lichtdurchlässigen Materials auf die ausgehärtete Hologrammschicht. Mittels einer zweitenAbformplatte erfolgt die Formgebung S8 der Materialschicht, an die sich das Aushärten S9 der Materialschicht zum Substrat anschließt. Zum Abschluss erfolgt ein Auseinanderführen S10 der Abformplatten voneinander, wobei sich der Lichtwellenleiter von den Abformplatten löst.

In allen Ausführungsformen des Verfahrens können zwischen den Abformplatten und den jeweiligen angrenzenden Materialschichten eine oder mehrere weitere Schichten eingefügt werden, die als Trennschichten zur besseren Ablösbarkeit der Materialschichten von der jeweiligen Abformplatte dienen.

### Bezugszeichenliste

- 1: Bildgenerator/Bildgebende Einheit
- 11: Anzeigeelement
- 14, 14R, 14G, 14B: Lichtquelle

- 2: Optikeinheit
- 20: Spiegel
- 21: Faltspiegel
- 22: Gekrümmter Spiegel
- 221: Lagerung
- 23: Transparente Abdeckung
- 24: Optische Folie/Polarisator
- 25: Blendschutz

- 3: Spiegeleinheit
- 31: Windschutzscheibe

- 5: Lichtwellenleiter
- 501: Obere Begrenzungsfläche
- 502: Untere Begrenzungsfläche
- 51: Falthologramm
- 52: Auskoppelhologramm
- 521: Auskoppelbereich
- 522: Spiegelebene
- 523: Spiegelebene
- 53: Einkoppelhologramm
- 531: Einkoppelbereich
- 54: Substrat
- 55: Deckschicht
- 56: Hologrammschicht

- 61: Auge/Betrachter
- 62: Eyebox
- 64: Störlichtquelle

- 70: Erste Abformplatte
- 71: Zweite Abformplatte

- L1...L4: Licht
- S1: Aufbringen einer Materialschicht auf eine erste Abformplatte
- S2: Aushärten der Materialschicht zu einer Deckschicht
- S3: Aufbringen einer Hologrammschicht auf die Deckschicht
- S4: Aufbringen eines Substrates auf die Hologrammschicht
- S5: Belichten der Hologrammschicht
- S6: Aushärten der Hologrammschicht
- S7: Aufbringen einer Materialschicht auf die Hologrammschicht
- S8: Formen der Materialschicht
- S9: Aushärten der Materialschicht zu einem Substrat
- S10: Auseinanderführen der Abformplatten
- SB1, SB2: Strahlenbündel
- SL: Sonnenlicht
- VB: Virtuelles Bild

## Patentansprüche

1. Verfahren zum Herstellen eines Lichtwellenleiters (5), mit den Schritten:
- Aufbringen (S1) einer Schicht eines lichtdurchlässigen Materials auf eine erste Abformplatte (70);
- Aushärten (S2) des aufgebrachten lichtdurchlässigen Materials zu einer Deckschicht (55);
- Aufbringen (S3) einer Hologrammschicht (56) auf die Deckschicht (55);
- Aufbringen (S4) eines Substrates (54) auf die Hologrammschicht (56); und
- Belichten (S5) und Aushärten (S6) der Hologrammschicht (56).

2. Verfahren zum Herstellen eines Lichtwellenleiters (5), mit den Schritten:
- Aufbringen (S1) einer Schicht eines lichtdurchlässigen Materials auf eine erste Abformplatte (70);
- Aushärten (S2) des aufgebrachten lichtdurchlässigen Materials zu einer Deckschicht (55);
- Aufbringen (S3) einer Hologrammschicht (56) auf die Deckschicht (55);
- Belichten (S5) und Aushärten (S6) der Hologrammschicht (56);
- Aufbringen (S7) einer Schicht eines lichtdurchlässigen Materials auf die Hologrammschicht (56);
- Formen (S8) des aufgebrachten lichtdurchlässigen Materials mittels einer zweiten Abformplatte (71); und
- Aushärten (S9) des aufgebrachten lichtdurchlässigen Materials zu einem Substrat (54).

3. Verfahren gemäß Anspruch 2, wobei die zweite Abformplatte (71) unter Krafteinwirkung in Kontakt mit der Schicht des lichtdurchlässigen Materials gebracht wird.

4. Verfahren gemäß einem der vorherigen Ansprüche, wobei zwischen der ersten Abformplatte (70) und der Schicht des lichtdurchlässigen Materials oder zwischen der zweiten Abformplatte (71) und der Schicht des lichtdurchlässigen Materials eine Trennschicht angeordnet wird.

5. Verfahren gemäß einem der vorherigen Ansprüche, wobei eine Schichtdicke der Hologrammschicht (56) beim Aufbringen (S3) der Hologrammschicht (56) auf die Deckschicht (55) durch Abstandshalter definiert wird.

6. Verfahren gemäß einem der vorherigen Ansprüche, wobei das lichtdurchlässige Material ein Lack oder ein optisch klarer Klebstoff ist.

7. Verfahren gemäß einem der vorherigen Ansprüche, wobei das einem Aushärtungsprozess unterzogene lichtdurchlässige Material einen Brechungsindex größer oder gleich 1,4 aufweist.

8. Lichtwellenleiter (5) für ein Anzeigegerät, wobei der Lichtwellenleiter (5) ein Substrat (54), eine Deckschicht (55) sowie eine dazwischen liegende Hologrammschicht (56) aufweist und mittels eines Verfahrens gemäß einem der vorherigen Ansprüche hergestellt ist.

9. Gerät zum Generieren eines virtuellen Bildes (VB), mit:
- einer bildgebenden Einheit (1) zum Erzeugen eines Bildes; und
- einer Optikeinheit (2) zum Projizieren des Bildes in Richtung einer Spiegeleinheit (3) zum Generieren des virtuellen Bildes (VB);
**dadurch gekennzeichnet, dass** das Gerät zumindest einen Lichtwellenleiter (5) gemäß Anspruch 8 zum Aufweiten einer Austrittspupille aufweist.

10. Fortbewegungsmittel mit einem Gerät gemäß Anspruch 9 zum Generieren eines virtuellen Bildes (VB) für einen Bediener des Fortbewegungsmittels.

## Claims

1. Method for producing an optical waveguide (5), including the steps of:
- applying (S1) a layer of a light-transmissive material onto a first mould plate (70);
- curing (S2) the applied light-transmissive material to form a cover layer (55);
- applying (S3) a hologram layer (56) onto the cover layer (55);
- applying (S4) a substrate (54) onto the hologram layer (56); and
- exposing (S5) and curing (S6) the hologram layer (56).

2. Method for producing an optical waveguide (5), including the steps of:
- applying (S1) a layer of a light-transmissive material onto a first mould plate (70);
- curing (S2) the applied light-transmissive material to form a cover layer (55);
- applying (S3) a hologram layer (56) onto the cover layer (55);
- exposing (S5) and curing (S6) the hologram layer (56);
- applying (S7) a layer of a light-transmissive material onto the hologram layer (56);
- shaping (S8) the applied light-transmissive material by means of a second mould plate (71); and
- curing (S9) the applied light-transmissive material to form a substrate (54).

3. Method according to Claim 2, wherein the second mould plate (71) is brought into contact with the layer of the light-transmissive material under the influence of force.

4. Method according to any of the preceding claims, wherein a separating layer is arranged between the first mould plate (70) and the layer of the light-transmissive material or between the second mould plate (71) and the layer of the light-transmissive material.

5. Method according to any of the preceding claims, wherein a layer thickness of the hologram layer (56) is defined by spacers during the application (S3) of the hologram layer (56) onto the cover layer (55).

6. Method according to any of the preceding claims, wherein the light-transmissive material is a lacquer or an optically clear adhesive.

7. Method according to any of the preceding claims, wherein the light-transmissive material that has been subjected to a curing process has a refractive index of greater than or equal to 1.4.

8. Optical waveguide (5) for a display device, wherein the optical waveguide (5) comprises a substrate (54), a cover layer (55) and an intervening hologram layer (56) and is fabricated by means of a method according to any of the preceding claims.

9. Device for generating a virtual image (VB), having:
- an image-generating unit (1) for producing an image; and
- an optics unit (2) for projecting the image in the direction of a mirror unit (3) for generating the virtual image (VB);
**characterized in that** the device comprises at least one optical waveguide (5) according to Claim 8 for expanding an exit pupil.

10. Means of transport having a device according to Claim 9 for generating a virtual image (VB) for an operator of the means of transport.

## Revendications

1. Procédé de fabrication d'un guide d'onde optique (5), comprenant les étapes suivantes :
- application (S1) d'une couche d'un matériau translucide sur une première plaque de moulage (70) ;
- durcissement (S2) du matériau translucide appliqué pour former une couche de recouvrement (55) ;
- application (S3) d'une couche holographique (56) sur la couche de recouvrement (55) ;
- application (S4) d'un substrat (54) sur la couche holographique (56) ; et
- exposition (S5) et durcissement (S6) de la couche holographique (56).

2. Procédé de fabrication d'un guide d'onde optique (5), comprenant les étapes suivantes :
- application (S1) d'une couche d'un matériau translucide sur une première plaque de moulage (70) ;
- durcissement (S2) du matériau translucide appliqué pour former une couche de recouvrement (55) ;
- application (S3) d'une couche holographique (56) sur la couche de recouvrement (55) ;
- exposition (S5) et durcissement (S6) de la couche holographique (56) ;
- application (S7) d'une couche d'un matériau translucide sur la couche holographique (56) ;
- mise en forme (S8) du matériau translucide appliqué au moyen d'une deuxième plaque de moulage (71) ; et
- durcissement (S9) du matériau translucide appliqué pour obtenir un substrat (54).

3. Procédé selon la revendication 2, dans lequel la deuxième plaque de moulage (71) est mise en contact avec la couche du matériau translucide sous l'effet d'une force.

4. Procédé selon l'une quelconque des revendications précédentes, dans lequel une couche de séparation est disposée entre la première plaque de moulage (70) et la couche du matériau translucide ou entre la deuxième plaque de moulage (71) et la couche du matériau translucide.

5. Procédé selon l'une quelconque des revendications précédentes, dans lequel une épaisseur de couche de la couche holographique (56) lors de l'application (S3) de la couche holographique (56) sur la couche de recouvrement (55) est définie par des éléments d'espacement.

6. Procédé selon l'une quelconque des revendications précédentes, dans lequel le matériau translucide est une laque ou un adhésif optiquement transparent.

7. Procédé selon l'une quelconque des revendications précédentes, dans lequel le matériau translucide soumis à un processus de durcissement présente un indice de réfraction supérieur ou égal à 1,4.

8. Guide d'onde optique (5) destiné à un dispositif d'affichage, le guide d'onde optique (5) comprenant un substrat (54), une couche de recouvrement (55) ainsi qu'une couche holographique (56) disposée entre ceux-ci, et fabriqué au moyen d'un procédé selon l'une quelconque des revendications précédentes.

9. Appareil destiné à générer une image virtuelle (VB), comprenant :
- une unité de formation d'image (1) destinée à générer une image ; et
- une unité optique (2) destinée à projeter l'image en direction d'une unité à miroir (3) pour générer l'image virtuelle (VB) ;
**caractérisé en ce que** l'appareil présente au moins un guide d'onde optique (5) selon la revendications 8, destiné à élargir une pupille de sortie.

10. Moyen de locomotion comprenant un appareil selon la revendication 9 pour générer une image virtuelle (VB) destinée à un opérateur du moyen de locomotion.
